# EUROPEAN PATENT SPECIFICATION

(11) **EP 4 158 743 B1**
(45) Date of publication and mention of the grant of the patent: **30.09.2026**
(21) Application number: 21733062.0
(22) Date of filing: 26.05.2021
(51) Int. Cl.: H02H 3/093, H01F 29/00, H02H 7/06, H02H 9/02

(54) **PASSIVE SAFETY ELECTRICAL SYSTEM**
PASSIVES ELEKTRISCHES SICHERHEITSSYSTEM
SYSTÈME ÉLECTRIQUE DE SÉCURITÉ PASSIF

(30) Priority: 26.05.2020 RS P20200621
(43) Date of publication of application: 05.04.2023
(73) Proprietor: Sinhronija Atom doo, 24322 Lovcenac (RS)
(72) Inventor: KIZIC , Mile, 21238 Curug (RS)
(74) Representative: noventive Patentanwaltsgesellschaft mbH
(86) International application number: PCT/EP2021/064123
(87) International publication number: WO 2021/239852

(56) References cited:
- EP-A2- 0 508 177
- CH-A5- 666 770
- CN-A- 105 958 431
- GB-A- 262 767
- US-A1- 2012 153 927

## Description

The invention relates to an electrical safety device and to a method of operating an electrical safety device.

Every year in the United States, arcing faults caused by short circuits are responsible for starting more than 28,000 home fires, killing and injuring hundreds of people, and causing over $700 million in property damage. Every year, hundreds of fires caused by short circuits in electrical installations around the world cause enormous damage to hotels, residential buildings, buildings of general cultural and historical significance, ships, submarines, etc.

In the field of electrical engineering, there is a variety of ideas about how to mitigate or even completely eliminate the impact of short circuits as a cause of fires in electrical installations. Known solution attempts include e.g. FID switches, ultra-fast fuses or other automation.

Also proposed as a solution have been isolation transformers, the purpose of which it is to eliminate the leakage of electrical current to the "ground". Generally, isolation transformers have a primary winding and a secondary winding which are magnetically coupled. When isolation transformers are used for protection, their primary winding is connected to the public electric network, e.g. via an electric socket. Via the magnetic coupling, energy is transferred from the primary winding to the secondary winding, where it is picked up for further use. If a person touches a circuit connected to the secondary winding while connected to ground, said person will not form a circuit between the electrical network and ground because the primary winding and the secondary winding are only coupled magnetically. Thus, the person is protected against electrocution in certain cases.

However, an isolation transformer will not eliminate the negative effects of short circuits due to potential equipment failure. The exposure to short circuit current will destroy the isolation power transformer by damaging electrical conductors and burning out the windings of the secondary coils of the isolated power transformer.

EP 0 508 177 A2 discloses a transformer device, the second side of which is connected to a circuit breaker device for interrupting an electric current flow. The circuit breaker device comprises one current detection transformer per phase and a control device. The control device will disconnect the second side if a current measured exceeds a capability of the isolation transformer.

CN 105958431 A discloses a protection device for limiting fault current on a low voltage side of a first transformer, wherein a second transformer device, comprising two windings connected in parallel but of opposite polarity, is connected in series with the low-voltage winding of the transformer. One of the windings is connected in series with a switch which is opened when an over-current condition is present.

GB 262 767 A discloses a circuit breaker for connecting two networks. The circuit breaker is configured to break the connection between the networks when a maximum current is exceeded.

In US 2012/0153927 A1, a saturated core fault current limiter is disclosed in which multiple AC coils are wound around the same core together with a DC bias winding.

It is an object of the present invention to improve short circuit safety in electrical applications.

To solve this problem, an electrical safety device according to claim 1 and a method according to claim 4 are proposed. Advantageous embodiments of the invention are subject of the dependent claims.

The problem is solved by an electrical safety device, configured to provide electrical energy from an electrical network via input terminals to at least one electrical consumer device connected to output terminals, wherein the electrical safety device comprises a first transformer device and a second transformer device, each of the transformer devices comprising a primary winding and a secondary winding, wherein each winding comprises a first terminal and a second terminal, wherein the primary winding of the first transformer device is adapted for connecting to an electrical power source via the input terminals, wherein the first terminal of the secondary winding of the first transformer devices connected to the first terminal of the primary winding of the second transformer device. The first transformer device and the second transformer device are isolation transformer devices, wherein their secondary windings do not comprise a connection to ground. The second terminal of the primary winding of the second transformer device is connected to the second terminal of the secondary winding of the second transformer device, wherein the first terminal of the secondary winding of the second transformer is provided to the electrical consumer device via the second output terminal. Furthermore, the electrical safety device comprises a control device and a switch device controllable by the control device for temporarily disconnecting the output terminals and a current measurement device arranged to measure an electrical current flowing between the first terminal of the secondary winding of the first transformer device and the first terminal of the primary winding of the second transformer device, wherein the control device is configured to control the switch device to disconnect the output terminals from the transformer devices when the measured electrical current leaves a predetermined current range.

When a short-circuit in the electric consumer device happens, the primary winding in the secondary winding built up opposing magnetic fields due to the short-circuit current flowing through both windings at an opposing polarity. This further slows the rise of the short-circuit current and allows the electrical safety device to operate the switch device. Furthermore, when a short-circuit is detected, power is cut to the electrical consumer devices connected to the output terminals.

This allows for current to flow through the primary winding of the second transformer device which, as a reactive load, can mitigate effects of a short-circuit. Using isolation transformer devices protects against electrocution in certain cases.

In an embodiment, one of the terminals of the secondary winding of the first transformer device is connected to a first output terminal and one of the terminals of the second transformer device is connected to the second output terminal.

In this way, both the secondary winding of the first transformer device and at least one of the windings of the second transformer device are available to dampen fast current changes like those caused by short circuits.

In an embodiment the switch device comprises a timer device and is configured to keep the output terminals disconnected for a predetermined minimum time after disconnecting them before reconnecting them.

This provision avoids a situation, in which the switch device keeps connecting and disconnecting a short-circuited electrical consumer device to power.

In an embodiment the control device is configured to control the switch device to keep the output terminals disconnected for a predefined minimum time before controlling the switch device to reconnect the output terminals.

In this way, repeated connecting and disconnecting of the short-circuited electrical consumer is avoided. Furthermore, the switch device is simplified.

The problem is further solved by a method of operating an electric safety device as mentioned above, comprising the steps: measuring a current flowing between the first terminal of the secondary winding of the first transformer device and the first terminal of the primary winding of the second transformer device; comparing the measured current to a predefined current range; if the measured current is determined to be outside the predefined current range, operating a switch device to disconnect the output terminals.

When the current range is defined such that it excludes short-circuit conditions, the electric safety device will disconnect the electrical consumer device when it operates outside acceptable parameters. In this way, the effect of short-circuit conditions in the electrical consumer device are mitigated.

In an embodiment, the method further comprises the steps: waiting for a predefined time to elapse; after waiting, operating the switch device to reconnect the output terminals.

This introduces a delay between disconnection and reconnection of the electrical consumer device. Instead of continuously switching a malfunctioning electrical consumer device on and off in fast succession, the electrical safety device will, after a time, try to detect whether the short-circuit condition has been resolved and will automatically return the electrical consumer device to operation.

Various embodiments are described more fully hereinafter with reference to the accompanying drawings, in which some, but not all embodiments of the invention are shown in the figures. Indeed, these inventions may be embodied in many different forms and should not be construed as limited to the embodiments set forth herein; rather, these embodiments are provided so that this enclosure will satisfy applicable legal, technical, safety and other requirements.
- Fig. 1: an electric schematic drawing of an embodiment of an electrical safety device not according to the invention;
- Fig. 2: an electric schematic drawing of another embodiment of an electrical safety device according to the invention;
- Fig. 3: an isometric view of an embodiment of an electrical safety device according to the invention;
- Fig. 4: an electric schematic drawing of another embodiment of an electrical safety device not according to the invention;
- Fig. 5: an electric schematic drawing of another embodiment of an electrical safety device not according to the invention;
- Fig. 6: an electric schematic drawing of another embodiment of an electrical safety device not according to the invention similar to the embodiment of Fig. 1;
- Fig. 7: an electric schematic drawing of another embodiment of an electrical safety device according to the invention similar to the embodiment of Fig. 2 and
- Fig. 8: an electric schematic drawing of another embodiment of an electrical safety device according to the invention while a short-circuit is detected in an embodiment similar to Fig. 2 or Fig. 7.

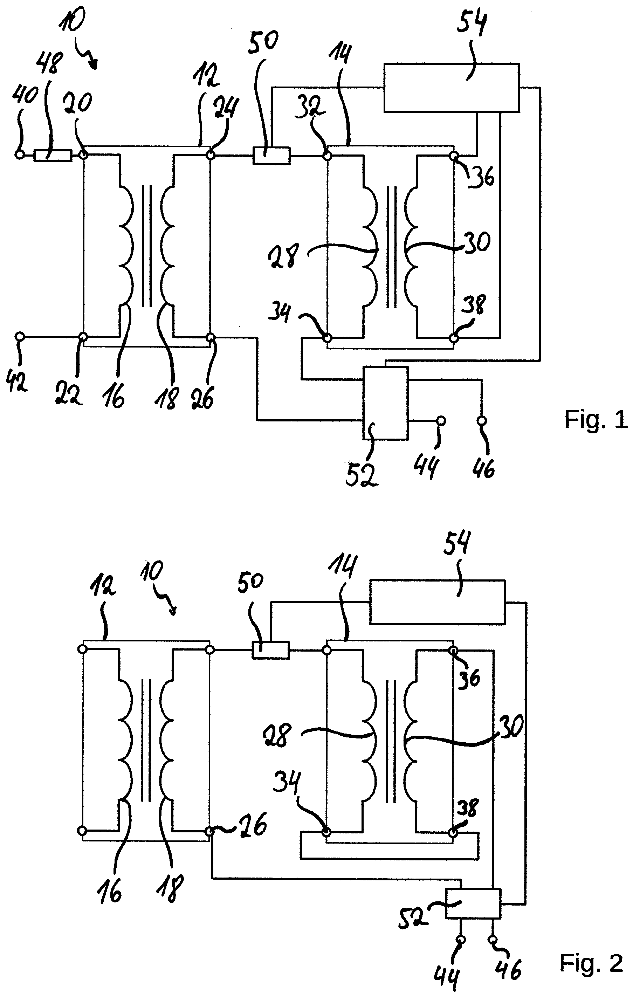

An electrical safety device 10 as shown in Fig. 1 comprises a first transformer device 12 and a second transformer device 14. The first transformer device 12 comprises a primary winding 16 and a secondary winding 18. The primary winding 16 comprises a first terminal 20 and a second terminal 22. The secondary winding 18 comprises a first terminal 24 and a second terminal 26.

The second transformer device 14 comprises a primary winding 28 and secondary winding 30. The primary winding 28 comprises a first terminal 32 and a second terminal 34. The secondary winding 30 comprises a first terminal 36 and a second terminal 38.

The electrical safety device 10 further comprises a set of input terminals, comprising a first input terminal 40 and a second input terminal 42. Furthermore, the electrical safety device 10 comprises a set of output terminals, comprising a first output terminal 44 and a second output terminal 46.

The first terminal 20 of the primary winding 16 of the first transformer device 12 is connected to the first input terminal 40 for example via a fuse device 48 for protection against overcurrent. The second terminal 22 of the primary winding 16 of the first transformer device 12 is connected to the second input terminal 42. The primary winding 16 of the first transformer device 12 and its terminals 20, 22 are configured to be connected to an electric network, for example a public utility electric network, via the first input terminal 40 and the second input terminal 42.

The first terminal 24 of the secondary winding 18 of the first transformer device 12 is connected to the first terminal 32 of the primary winding 28 of the second transformer device 14. A current measurement device 50 is arranged on this connection such that a current flowing from the first terminal 24 of the secondary winding 18 of the first transformer device 12 to the first terminal 32 of the primary winding 28 of the second transformer device 14 can be measured by it.

The second terminal 26 of the secondary winding 18 of the first transformer device 12 is connected to the first output terminal 44 via a switch device 52 which is configured to disconnect the first output terminal 44 from the second terminal 26 when operated to do so. The second terminal 34 of the primary winding 28 of the second transformer device 14 is connected to the second output terminal 46 via the switch device 52 which is also configured to disconnect the second output terminal 46 from the second terminal 34 when operated to do so.

The electrical safety device 10 further comprises a control device 54 for controlling and/or operating parts of the electrical safety device 10, for example the switch device 52. The control device 54 is for example connected to the current measurement device 50 to receive current measurements of the current flowing through the current measurement device 50.

During normal operation of the electric safety device 10, the current measurement device 50 for example continuously measures a current flowing between the first terminal 24 of the secondary winding 18 of the first transformer device 12 and the first terminal 32 of the primary winding 28 of the second transformer device 14 and transmits the current measurements to the control device 54. The control device 54 for example continuously compares the measured current to a predefined maximum current which is for example stored in a memory device of the control device 54 and which represents a condition in which a short-circuit has occurred between the first output terminal 44 and the second output terminal 46. If the control device 54 determines that the measured current exceeds the predefined maximum current, it operates the switch device 52 to disconnect the first output terminal 44 in the second output terminal 46.

After the switch device 52 has disconnected the output terminals 44, 46, the current measured by the current measurement device 50 will diminish. If the measured current falls below a predefined reset current which is for example stored in the memory device of the control device 54, the switch device 52 may be, for example, operated to reconnect the output terminals 44, 46, which will in turn lead to a rising current if the short-circuit has not been removed. This would again lead to a disconnection of the output terminals 44, 46. To avoid a situation in which, for example, the switch device 52 is operated to rapidly connect and disconnect the output terminals 44, 46, the switch device 52 is not operated to connect the output terminals 44, 46 immediately when the measured current has fallen below the predefined reset current.

Instead, the switch device 52 may, for example, be operated to wait for a predetermined amount of time before reconnecting the output terminals 44, 46. If, at that time, the short-circuit across the first output terminal 44 and the second output terminal 46 still persists, the output terminals 44, 46 will be disconnected again as soon the current measurement device 50 measures the increasing current.

While the output terminals 44, 46 are short-circuited and connected to the second terminals 26, 34 of the windings 18, 28, a rise of the current flowing through the short-circuit is limited by the primary winding 28 of the second transformer device 14. Due to the rising current, the winding 28 transfers energy into its surrounding magnetic field and thus limits the rise of the current, protecting whatever device is connected to the output terminals 44, 46 and the connections, cables and further equipment in between from an over-current condition which could lead to development of excessive heat, sparks and fire.

The terminals 36, 38 of the secondary winding 30 of the second transformer device 14 may be, for example, connected to the control device 54. The control device 54 may for example measure a voltage across the terminals 36, 38 or a rate of change of the voltage across the terminals 36, 38 to determine whether a short-circuit has occurred between the output terminals 44, 46.

In further embodiments, the control device 54 may for example rely on the current measurement device 50 and/or on the measurement of the voltage across the terminals 36, 38 to determine whether a short-circuit has occurred between the output terminals 44, 46.

An embodiment of the electrical safety device 10 according to the invention is shown in Fig. 2 and is, for example, suited for high power dissipation on the output terminals 44, 46. For example, the present embodiment may be more appropriate than others for use with a power dissipation of more than 400 W across the output terminals 44, 46. Only the differences to the embodiments based on Fig. 1 will be described herein.

The second terminal 34 of the primary winding 28 of the second transformer device 14 is connected to the second terminal 38 of the secondary winding 30 of the second transformer device 14. Furthermore, the first terminal 36 of the secondary winding 30 of the second transformer device 14 is connected to the second output terminal 46 via the switch device 52.

In embodiments based on this configuration of the second transformer device 14, when a short-circuit occurs across the first output terminal 44 and the second output terminal 46, the short-circuit current flows through the primary winding 28 and the secondary winding 30 with reverse polarity. In this way, the magnetic field produced by the current through the primary winding 28 and the magnetic field produced by the current through the secondary winding 30 counteract each other, providing a slow-rising short-circuit current and protecting against excessive sparking and rapid changes of current.

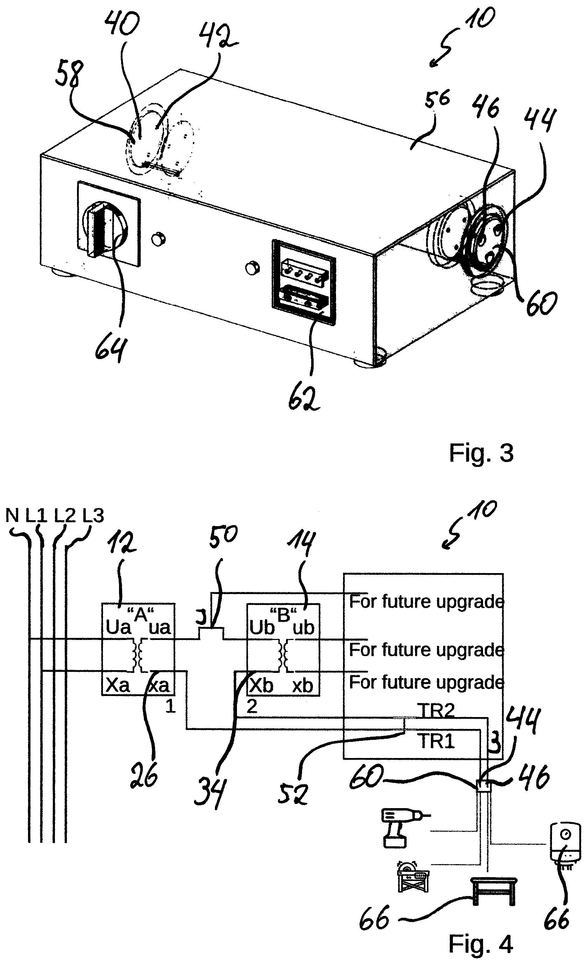

Regarding a further embodiment of the electrical safety device 10 shown in Fig. 3, the electrical safety device 10 is arranged in a housing 56. The first input terminal 40 and the second input terminal 42 are arranged in an input socket 58. The first output terminal 44 and the second output terminal 46 are arranged in an output socket 60. The housing 56 further comprises an extension socket 62 and an on/off-switch 64.

The on/off-switch 64 is arranged between the input terminals 40, 42 and the terminals 20, 22 of the primary winding 16 of the first transformer device 12. When the on/off-switch 64 is turned off, the connection between the primary winding 16 and the input terminals 40, 42 is disconnected and the electrical safety device 10 is separated from the electrical network.

The extension socket 62 comprises a variety of terminals which may be used to connect extension modules for the electrical safety device 10. For example, the control device 54 may be provided as an extension module to be seated in the extension socket 62.

In further embodiments, a protective device, for example a freewheeling diode or a varistor may be provided on either or both sides of the switch device 52 to prevent sparking from magnetic self-induction. The protective device may, for example, be connected across the output terminals 44, 46 to protect against an inductive load in the short-circuit. Furthermore, the protective device may, for example, be connected across the terminals 36, 38 of the secondary winding 30 of the second transformer device 14 or, for example, across the second terminal 26 of the secondary winding 18 of the first transformer device 12 and the first terminal 36 of the secondary winding 30 of the second transformer device 14. One or more protective devices may also be comprised in the control device 54.

Variants and further embodiments described with respect to one embodiment are also applicable to other embodiments.

An electrical consumer device is a device that consumes electric energy.

The present invention provides a unique, and so far, not known and not applied method of connecting two isolation transformer devices 12, 14. The invention is based on the application of isolation transformer devices 12, 14 which are well known for their safety features since there is no connection of the secondary winding 18 with ground.

Isolation transformer devices 12, 14 are usually used standalone, primarily in extra low-voltage systems for noise elimination, in the computer industry and laboratories. Within the present invention, isolating transformer devices 12, 14 can become the standard of protection regardless of the power or the type of the consumer.

In the event of prolonged exposure of the circuit to a short-circuit current in the form of a pulse of enormous intensity, regardless of the isolation transformer devices' 12, 14 excellent features of the protection, sparking may occur on the electrical installations which can cause a fire. The present invention provides complete protection against sparking, heating of electrical installations and fire.

In addition to the unique way of connecting between two isolation transformer devices 12, 14, the present invention also implies the application of a control device 54, for example an appropriate programmable logic controller (PLC) and a switch device 52, for example a time relay (TR). The PLC may, for example, be programmed to monitor a preset current value during regular operation. In case the PLC reads a current intensity different, from a preset or predefined range, for example exceeding the predefined current intensity, it will send an operating signal to the time relay that will set the time relay to the Open position, thus disconnecting the output terminals 42, 44.

This will break the electrical circuit and only the primary or primary winding 16 of the first transformer device 12 will remain energized. Here we underline that until the response of the time relay, short-circuit current will flow through the windings 28, 30 of the second isolation transformer device 14 as well as through the secondary windings 18 of the first isolation transformer device 12, but it will not damage the windings 18, 28, 30 because in this case it will act as inductive consumers. The time relay reacts in a few tenths of a second so that this short-circuit surge current impulse cannot lead to sparking or damage to the windings 18, 28, 30 on the transformer devices 12, 14.

All above are proved and tested under existing prototype.

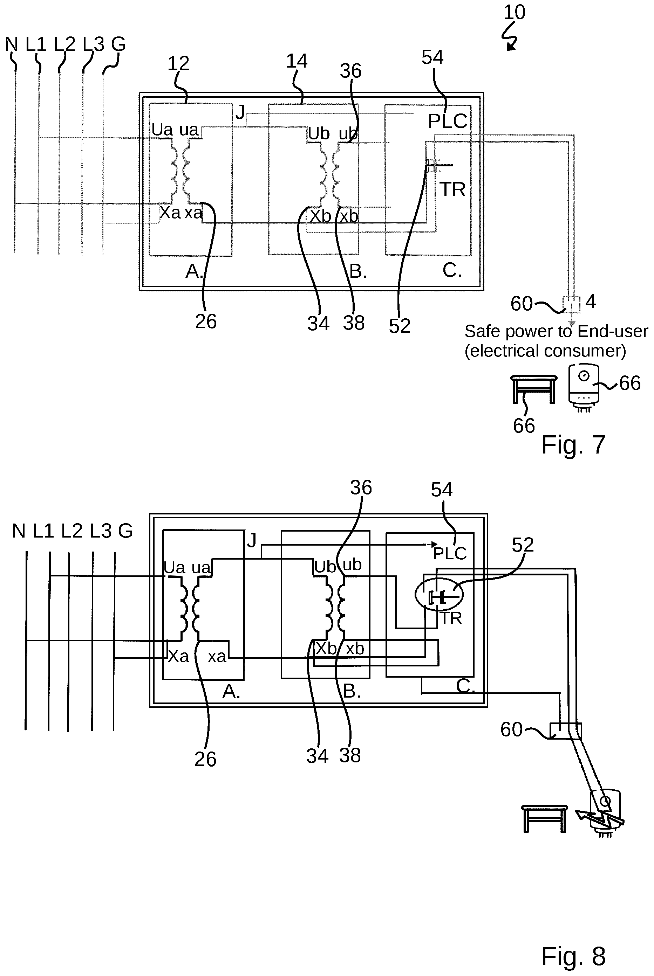

Various embodiments of the invention include the system of two isolated power transformer devices 12, 14 per each phase interconnected as shown for example in Figs. 7 and 8. When connected to the electrical system, placed between the power supply and the electrical devices/consumers, the various embodiments of the invention eliminate any effect of potential short circuit connection preventing overheating of the electrical installations or any devices in the system.

In particular, according to the various embodiments of invention, the present invention provides safety of the electrical systems under any electrical loading condition and/or any electrical current eliminating negative effects of short circuit current, transferring it to magnetic energy. Various embodiments of the invention also allow a user to identify the existence of a short circuit in the electrical system, at the same time eliminating overload of the conductors and components in the system, preventing any damage in electrical installations and connected equipment. After eliminating the cause for short circuit having all devices protected by the present invention, the system, for example the electrical safety device 10, will be ready to restore normal operation.

The selected result is achieved, according to various embodiments, for any electrical system and circuit independent of the current, type of use, number of phases, number of devices, connections, users, capacity or size.

Various embodiments of the present invention concern a system of two interconnected isolation power transformer devices 12, 14, wherein the second transformer device 14 during the short circuit event acts as reactive impedance. More specifically, various embodiments of the invention concern the unique and specific wiring of two power isolation transformer devices 12, 14 interconnected in a way shown in the Figs. of this application.

Various embodiments may include variation in shape, material, construction method, capacity, size and usage. Various embodiments may also allow for the variations in design of the electronic components used in conjunction with the interconnected isolation power transformers. For example, in one embodiment of the present invention, the electrical safety device may include the system of interconnected isolation power transformers as presented in this application affixed to the housing, connections to a power supply, distribution connectors, operation switches, status lights, analog outlets for monitoring connections and programmable logical controllers with appropriate communicating protocols.

Fig. 3 illustrates one embodiment of the invention. As shown, the electrical safety device 10 is for example placed into a housing 56 with one or more of the following:
One variance of the Power (In) Supply socket, for example input socket 58, where required;
One variance of the Power (Out) Distribution Socket, for example output socket 60, where required;
One variance of the On/Off Switch 64 where required;
One variance of a Power Status Signal Lamp where required;
One variance of the Future Upgrade Connectors, for example the extension socket 62, where required;
One variance of the Alarm Status Signal Light where required.

According to other embodiments, the components shown on the Fig. 3 may include variations. For example:
In other embodiments, the housing may vary in material, shape, size, number and types of switches, connections, interfaces and devices attached.

In other embodiments, the power supply and distribution connection type may vary according to the type, size and number of the available power supplies, power capacity, industry and safety standards to comply to. For example, the power connections, for example the input socket 58 and the input terminals 40 42, could be achieved through polyphase industrial socket or through clamps with no status lights or any connections for future upgrade.

Fig. 4 schematically Illustrates the electrical safety device of fig. 1 placed in the electrical system.

The idea behind is to protect all devices, conductors and other parts of the electrical system, shown herein as Power Distribution / End User(s), for example, consumer devices 66.

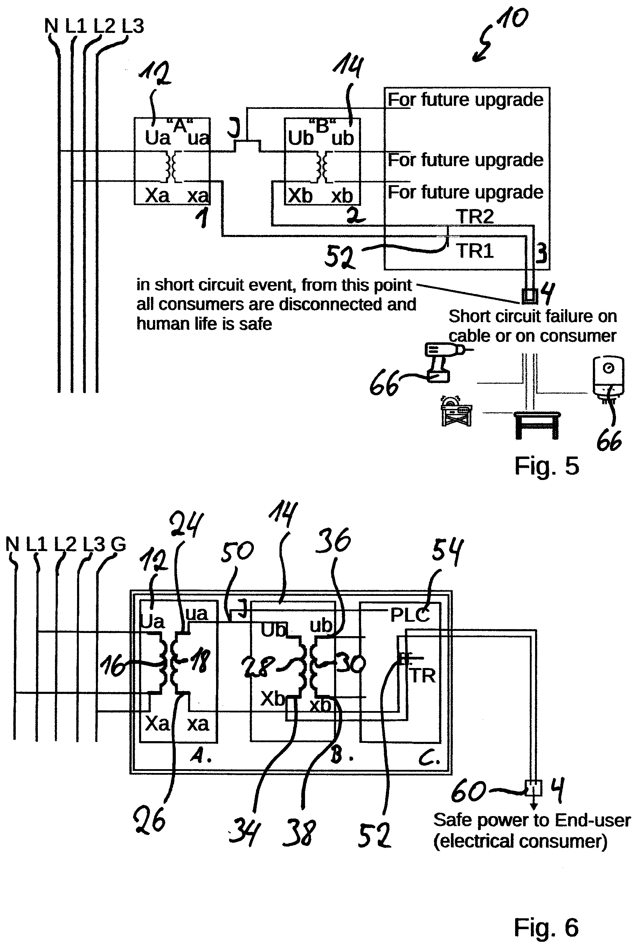

**Figs. 5 and 6** illustrate schematic diagram of this art for power up to 400W and it applies a unique way of connecting two isolation transformer devices 12, 14 in the various embodiments of an electrical safety device. The idea behind the various embodiments in the present application, which are not all part of the invention, is to have the transformer devices 12, 14 placed in the electrical system between the power source, for example connected to the input socket 58, and the consumer / load, for example connected to the output socket 60:
- Various embodiments consider two isolation power transformer devices 12, 14: transformer device 14, also referenced as "A" with connection points, for example terminals 20, 22, also referenced as "Ua" and "Xa" on the Primary Coil, also referenced as the primary winding 16, and for example terminals 24, 26, also referenced as "ua" and "xa" on the Secondary Coil, also referenced as the secondary winding 18, and transformer device 16, also referenced as "B" with connection points, for example terminals 32, 34, also referenced as "Ub" and "Xb" on the Primary Coil, also referenced as primary winding 28, and terminals 36, 38, also referenced as "ub" and "xb" on the secondary winding 30, also referenced as the Secondary Coil;
- In various embodiments an external power supply is connected to the input (Primary coil) of the Isolation Power Transformer A ("Ua" & "Xa");
- In one embodiment, the Secondary coil of transformer "A" voltage is induced and equal to the input voltage since the number of windings of the primary and secondary coils at the isolation power transformer devices 12, 14 is equal (transmission ratio is 1:1).
- In various embodiments Terminal "Ub" from transformer "B" is connected to Terminal "ua" of Transformer "A";
- In various embodiments Terminal "xa" from Transformer "A" is connected to the output socket 60 via the closed contact of the time relay ("TR 1") and/or switch device 52;
- In various embodiments Terminal "Xb" from Transformer "B" is connected to the output socket 60 via the closed contact of the time relay ("TR 2") and/or switch device 52;
- In various embodiments the output ("J"), for example from a current measurement device 50 will be provided between the terminals "ua" and "Ub" for any future upgrade including but not limited to communications, alarm, controls, announcement or other systems;
- Conductors from "TR1" and "TR2" are connected to output socket 60, for example placed on PSES housing 56. Variations in device construction may allow direct connecting conductors from "TR1" and "TR2" to the distribution panel as well.
- In various embodiments, the secondary winding 30 of power isolation transformer "B" is connected to the PLC. The "ub" and "xb" connectors could be used in future upgrades of various embodiments including but not limited to communications, alarm, controls, announcement or other systems.

**Fig. 7** illustrates schematic diagram of this art for power over 400W and it implies a unique way of connecting two isolation transformer devices 12, 14 in the various embodiments of invention. The idea behind various embodiments of invention is to have them placed in the electrical system between the power source and the consumer / load:
- Various embodiments of the invention consider two isolation power transformer devices 12, 14: Transformer device 14, "A" with connection points "Ua" and "Xa" on the Primary Coil and "ua" and "xa" on the Secondary Coil, and Transformer device 16, "B" with connection points "Ub" and "Xb" on the Primary Coil and "ub" and "xb" on the Secondary Coil;
- In various embodiments, an external power supply is connected to the input (Primary coil) of the Isolation Power Transformer device 14, A ("Ua" & "Xa");
- In one embodiment the Secondary coil of transformer device 14, "A", voltage is induced and equal to the input voltage since the number of windings of the primary and secondary coils at isolation power transformers is equal (transmission ratio is 1:1).
- In various embodiments of the invention, terminal "Ub" from transformer 16, "B" is connected to terminal "ua" of transformer 14, "A";
- In various embodiments of invention Terminal "xa" from Transformer 14, "A" is connected to the output socket 60 via the closed contact of the time relay ("TR 1");
- In various embodiments of invention Terminal "Xb" from primary winding of transformer device 16, "B" is connected to Terminal "xb" of the secondary winding of the same transformer.
- Terminal "ub" form the secondary winding of the Transformer 16, "B" is connected to the output socket 60 via the closed contact of the time relay ("TR 2");
- In various embodiments of the invention the output ("J") will be provided between the terminals "ua" and "Ub" for any future upgrade, for example comprising the current measurement device 50, including but not limited to communications, PLC's, alarm, controls, announcement or other systems;
- Conductors from "TR1" and "TR2" are for example connected to output socket 60, placed on PSES housing 56. Variations in device construction may, for example, allow direct connecting conductors from "TR1" and "TR2" to the distribution panel as well.
- In the various embodiments of invention, the secondary coil of power isolation transformer 16, "B" remains open. The "ub" and "xb" connectors will be used in future upgrades of various embodiments including but not limited to communications, alarm, controls, announcement or other systems.

Fig. 8 illustrates the schematic diagram of the various embodiments of invention in the event of the short circuit connection on the consumer side.

In normal mode, the final consumer is connected to a grounded power supply socket, for example the output socket 60, and operates under the voltage and current necessary for proper operation, in accordance with its technical characteristics.

When a short circuit occurs between the socket and the end consumer due to a fault in the conductor, the contact "xa" on the secondary winding of the transformer 14, A and the contact "ub" on the secondary winding of the transformer 16, B, become connected through contact "ua". That way secondary winding of Transformer 14, "A" and both windings in transformer 16, "B" acts like consumer of the short circuit current impulse.

Terminal "J", for example a current measurement device 50, is connected to the control device 54, for example an appropriate Programmable Logical Controller (PLC). PLC are programmed to monitor a preset current value during regular operation. In case the PLC reads a current intensity different from the preset one, it sends the signal to a time relay (switch device 52) that will set the contacts of the time relay to the Open position.

This will open the electrical circuit and only the primary winding of the first transformer will remain energized. Here we underline that until the response of the Time Relay, short-circuit current will flow through the windings of the second isolation transformer as well as through the secondary windings of the first isolation transformer, but it will not damage the windings because in this case it will act as inductive consumers.

As shown in Fig. 8, during the short circuit event, consumer is disconnected and the electrical circuit is closed via primary coil or primary winding 16 of the power isolation transformer device 16, B. In particular, the primary coil of transformer device 16, B acts as a reactive impedance.

The present invention employs a unique way of interconnecting two power isolation transformer devices 12, 14 in specific way delivering to the end-user such electrical power free of electrical shocks and short circuit implications.

The various embodiments of invention may include ports for future upgrade which could be used for connections to appropriate process switches, measuring and regulating devices and programmable controllers to provide appropriate automatic control and alarm in real time in case of a short circuit. The present invention provides full protection against:
Sparking, Overheating and damage on electrical installations; Overheating and damage for consumer device; Stressing the transformer windings with a strong short-circuit shock current that can lead to damage to the windings or their ignition.

Although this invention has been described in specific detail with reference to the disclosed embodiments, it will be understood that many variations and modifications may be effected within the scope of the invention as defined in the appended claims.

The solution presented by various embodiments of invention will find wide application both in various branches of many industries as well as households, and it is compatible with all existing electricity distribution networks around the world.

As explained in this application, the various embodiments of invention with the unique interconnection between the isolated power transformers offers the level of protection for electrical devices, installations and human life. One of the main characteristics of this art is protection of the users while in the contact with "live wire" without any risk for human life!

In particular, the art offers characteristics like no other device on the market currently. The wiring principle of the isolation power transformers of appropriate capacity fully protects the end consumer from electrical shock, as well as valuable electrical and electronic equipment, production and real estate investments and many more. The expectation is that the various embodiments of this invention will also help reducing the insurance rates but more important, it will help saving human lives.

OSHA has dedicated a large section of the Code of Federal Regulations to electrical safety. However, fall protection, scaffold, steel erection, hazard communication, lockout/tagout, and confined spaces are normally thought of first when discussing occupational health and safety issues, while electrical safety often goes overlooked. Use of various embodiments of this invention can mitigate all three main electrical hazards recognized by OSHA:
- Contact with live parts causing shock and burns;
- Faults which could cause fires;
- Fire or explosion where electricity could be the source of ignition in a potentially flammable or explosive atmosphere, e.g. in a spray paint booth.

NFPA studies of fatal and non-fatal electrical injuries shows that between 2012 and 2016, 9,760 workers in the U.S. were injured through exposure to electricity - an average of 1,952 annually. Between 2007 and 2016, 21,550 workers in the U.S. experienced some type of non-fatal electrical injury.

Nearly three workers die every week (as calculated over a five-year period) from exposure to electricity - a total of 739 deaths during that period. One-fifth of the victims were self-employed. Most fatalities (417) were caused by direct exposure to electricity, such as touching a live wire.

### List of References

- 10: electrical safety device
- 12: first transformer device
- 14: second transformer device
- 16: primary winding (of the first transformer device)
- 18: secondary winding (of the first transformer device)
- 20: first terminal (of the primary winding of the first transformer device)
- 22: second terminal (of the primary winding of the first transformer device)
- 24: first terminal (of the secondary winding of the first transformer device)
- 26: second terminal (of the secondary winding of the first transformer device)
- 28: primary winding (of the second transformer device)
- 30: secondary winding (of the second transformer device)
- 32: first terminal (of the primary winding of the second transformer device)
- 34: second terminal (of the primary winding of the second transformer device)
- 36: first terminal (of the secondary winding of the second transformer device)
- 38: second terminal (of the secondary winding of the second transformer device)
- 40: first input terminal
- 42: second input terminal
- 44: first output terminal
- 46: second output terminal
- 48: fuse device
- 50: current measurement device
- 52: switch device
- 54: control device
- 56: housing
- 58: input circuit
- 60: an output socket
- 62: extension socket
- 64: on/off-switch
- 66: (electrical) consumer device

## Claims

1. Electrical safety device (10), configured to provide electrical energy from an electrical network via input terminals (40, 42) to at least one electrical consumer device connected to output terminals (44, 46), wherein the electrical safety device (10) comprises a first transformer device (12) and a second transformer device (14), each of the transformer devices (12, 14) comprising a primary winding (16, 28) and a secondary winding (18, 30), wherein each winding (16, 18, 28, 30) comprises a first terminal (20, 24, 32, 36) and a second terminal (22, 26, 34, 38), wherein
the primary winding (16) of the first transformer device (12) is adapted for connecting to an electric power source via the input terminals (40, 42),
wherein the first terminal (24) of the secondary winding (18) of the first transformer device (12) is connected to the first terminal (32) of the primary winding (28) of the second transformer device (14), and wherein the first transformer device (12) and the second transformer device (14) are isolation transformer devices (12, 14), wherein their secondary windings (18, 30) do not comprise a connection to ground, **characterized in that** the second terminal (34) of the primary winding (28) of the second transformer device (14) is connected to the second terminal (38) of the secondary winding (30) of the second transformer device (14), wherein the first terminal (36) of the secondary winding (30) of the second transformer (14) is provided to the electrical consumer device via a second output terminal (46) and wherein the second terminal (26) of the secondary winding (18) of the first transformer (10) is provided to the electrical consumer device via a first output terminal (44), and wherein the electrical safety
device (10) comprises a control device (54) and a switch device (52) controllable by the control device (54) for temporarily disconnecting the output terminals (44, 46) and a current measurement device (50) arranged to measure an electrical current flowing between the first terminal (24) of the secondary winding (18) of the first transformer device (12) and the first terminal (32) of the primary winding (28) of the second transformer device (14), wherein
the control device (54) is configured to control the switch device (52) to disconnect the output terminals (44, 46) from the transformer devices (12, 14) when the measured electrical current leaves a predefined current range.

2. Electrical safety device according to claim 1, **characterized in that** the switch device (52) comprises a timer device and is configured to keep the output terminals (44, 46) disconnected for a predefined minimum time after disconnecting them before reconnecting them.

3. Electrical safety device according to claim 1, **characterized in that** the control device (54) is configured to control the switch device (52) to keep the output terminals (44, 46) disconnected for a predefined minimum time before controlling the switch device (52) to reconnect the output terminals (44, 46).

4. Method of operating an electrical safety device (10) according to any of the claims 1 to 3, comprising the steps:
Measuring a current flowing between the first terminal (24) of the secondary winding (18) of the first transformer device (12) and the first terminal (32) of the primary winding (28) of the second transformer device (14);
Comparing the measured current to a predefined current range;
If the measured current is determined to be outside the predefined current range, operating a switch device (52) to disconnect the output terminals (44, 46).

5. Method according to claim 4, **characterized by** the step:
Waiting for a predefined time to elapse;
After waiting, Operating the switch device (52) to reconnect the output terminals (44, 46).

## Patentansprüche

1. Elektrische Sicherheitsvorrichtung (10), eingerichtet zum Bereitstellen elektrischer Energie von einem elektrischen Netz über Eingangsanschlüsse (40, 42) an mindestens ein mit Ausgangsanschlüssen (44, 46) verbundenes elektrisches Verbrauchergerät, wobei die elektrische Sicherheitsvorrichtung (10) eine erste Transformatorvorrichtung (12) und eine zweite Transformatorvorrichtung (14) umfasst, wobei jede der Transformatorvorrichtungen (12, 14) eine Primärwicklung (16, 28) und eine Sekundärwicklung (18, 30) umfasst, wobei jede Wicklung (16, 18, 28, 30) einen ersten Anschluss (20, 24, 32, 36) und einen zweiten Anschluss (22, 26, 34, 38) umfasst, wobei
die Primärwicklung (16) der ersten Transformatorvorrichtung (12) dazu eingerichtet ist, über die Eingangsanschlüsse (40, 42) mit einer elektrischen Energiequelle verbunden zu werden,
wobei der erste Anschluss (24) der Sekundärwicklung (18) der ersten Transformatorvorrichtung (12) mit dem ersten Anschluss (32) der Primärwicklung (28) der zweiten Transformatorvorrichtung (14) verbunden ist, und wobei die erste Transformatorvorrichtung (12) und die zweite Transformatorvorrichtung (14) Trenntransformatorvorrichtungen (12, 14) sind, wobei deren Sekundärwicklungen (18, 30) keine Verbindung zur Erde aufweisen, **dadurch gekennzeichnet, dass** der zweite Anschluss (34) der Primärwicklung (28) der zweiten Transformatorvorrichtung (14) mit dem zweiten Anschluss (38) der Sekundärwicklung (30) der zweiten Transformatorvorrichtung (14) verbunden ist, wobei der erste Anschluss (36) der Sekundärwicklung (30) des zweiten Transformators (14) dem elektrischen Verbrauchergerät über einen zweiten Ausgangsanschluss (46) bereitgestellt wird, und wobei der zweite Anschluss (26) der Sekundärwicklung (18) des ersten Transformators (10) dem elektrischen Verbrauchergerät über einen ersten Ausgangsanschluss (44) bereitgestellt wird, und wobei die elektrische Sicherheitsvorrichtung (10) eine Steuervorrichtung (54) und eine durch die Steuervorrichtung (54) ansteuerbare Schaltvorrichtung (52) zum vorübergehenden Trennen der Ausgangsanschlüsse (44, 46) sowie eine Strommessvorrichtung (50) umfasst, die dazu eingerichtet ist, einen zwischen dem ersten Anschluss (24) der Sekundärwicklung (18) der ersten Transformatorvorrichtung (12) und dem ersten Anschluss (32) der Primärwicklung (28) der zweiten Transformatorvorrichtung (14) fließenden elektrischen Strom zu messen, wobei
die Steuervorrichtung (54) dazu eingerichtet ist, die Schaltvorrichtung (52) so anzusteuern, dass diese die Ausgangsanschlüsse (44, 46) von den Transformatorvorrichtungen (12, 14) trennt, wenn der gemessene elektrische Strom einen vorgegebenen Strombereich verlässt.

2. Elektrische Sicherheitsvorrichtung nach Anspruch 1, **dadurch gekennzeichnet, dass** die Schaltvorrichtung (52) eine Zeitgebervorrichtung umfasst und dazu eingerichtet ist, die Ausgangsanschlüsse (44, 46) nach deren Trennung für eine vorgegebene Mindestzeit getrennt zu halten, bevor sie wieder verbunden werden.

3. Elektrische Sicherheitsvorrichtung nach Anspruch 1, **dadurch gekennzeichnet, dass** die Steuervorrichtung (54) dazu eingerichtet ist, die Schaltvorrichtung (52) so anzusteuern, dass diese die Ausgangsanschlüsse (44, 46) für eine vorgegebene Mindestzeit getrennt hält, bevor sie die Schaltvorrichtung (52) so ansteuert, dass diese die Ausgangsanschlüsse (44, 46) wieder verbindet.

4. Verfahren zum Betreiben einer elektrischen Sicherheitsvorrichtung (10) nach einem der Ansprüche 1 bis 3, umfassend die folgenden Schritte:
Messen eines zwischen dem ersten Anschluss (24) der Sekundärwicklung (18) der ersten Transformatorvorrichtung (12) und dem ersten Anschluss (32) der Primärwicklung (28) der zweiten Transformatorvorrichtung (14) fließenden Stroms;
Vergleichen des gemessenen Stroms mit einem vorgegebenen Strombereich; wenn festgestellt wird, dass der gemessene Strom außerhalb des vorgegebenen Strombereichs liegt, Betätigen einer Schaltvorrichtung (52) zum Trennen der Ausgangsanschlüsse (44, 46).

5. Verfahren nach Anspruch 4, **gekennzeichnet durch** den Schritt:
Warten, bis eine vorgegebene Zeit verstrichen ist;
nach dem Warten, Betätigen der Schaltvorrichtung (52) zum Wiederverbinden der Ausgangsanschlüsse (44, 46).

## Revendications

1. Dispositif de sécurité électrique (10), configuré pour fournir de l'énergie électrique provenant d'un réseau électrique via des bornes d'entrée (40, 42) à au moins un appareil consommateur électrique raccordé à des bornes de sortie (44, 46), dans lequel le dispositif de sécurité électrique (10) comprend un premier dispositif transformateur (12) et un second dispositif transformateur (14), chacun des dispositifs transformateurs (12, 14) comprenant un enroulement primaire (16, 28) et un enroulement secondaire (18, 30), dans lequel chaque enroulement (16, 18, 28, 30) comprend une première borne (20, 24, 32, 36) et une seconde borne (22, 26, 34, 38), dans lequel l'enroulement primaire (16) du premier dispositif transformateur (12) est adapté pour être raccordé à une source d'énergie électrique via les bornes d'entrée (40, 42),
dans lequel la première borne (24) de l'enroulement secondaire (18) du premier dispositif transformateur (12) est raccordée à la première borne (32) de l'enroulement primaire (28) du second dispositif transformateur (14), et dans lequel le premier dispositif transformateur (12) et le second dispositif transformateur (14) sont des dispositifs transformateurs d'isolement (12, 14), dont les enroulements secondaires (18, 30) ne comprennent pas de raccordement à la terre, **caractérisé en ce que** la seconde borne (34) de l'enroulement primaire (28) du second dispositif transformateur (14) est raccordée à la seconde borne (38) de l'enroulement secondaire (30) du second dispositif transformateur (14), dans lequel la première borne (36) de l'enroulement secondaire (30) du second transformateur (14) est fournie à l'appareil consommateur électrique via une seconde borne de sortie (46), et dans lequel la seconde borne (26) de l'enroulement secondaire (18) du premier transformateur (10) est fournie à l'appareil consommateur électrique via une première borne de sortie (44), et dans lequel le dispositif de sécurité électrique (10) comprend un dispositif de commande (54) et un dispositif de commutation (52) pilotable par le dispositif de commande (54) pour déconnecter temporairement les bornes de sortie (44, 46), ainsi qu'un dispositif de mesure de courant (50) agencé pour mesurer un courant électrique circulant entre la première borne (24) de l'enroulement secondaire (18) du premier dispositif transformateur (12) et la première borne (32) de l'enroulement primaire (28) du second dispositif transformateur (14), dans lequel
le dispositif de commande (54) est configuré pour piloter le dispositif de commutation (52) de manière à déconnecter les bornes de sortie (44, 46) des dispositifs transformateurs (12, 14) lorsque le courant électrique mesuré sort d'une plage de courant prédéfinie.

2. Dispositif de sécurité électrique selon la revendication 1, **caractérisé en ce que** le dispositif de commutation (52) comprend un dispositif de temporisation et est configuré pour maintenir les bornes de sortie (44, 46) déconnectées pendant une durée minimale prédéfinie après leur déconnexion, avant de les reconnecter.

3. Dispositif de sécurité électrique selon la revendication 1, **caractérisé en ce que** le dispositif de commande (54) est configuré pour piloter le dispositif de commutation (52) de manière à maintenir les bornes de sortie (44, 46) déconnectées pendant une durée minimale prédéfinie, avant de piloter le dispositif de commutation (52) de manière à reconnecter les bornes de sortie (44, 46).

4. Procédé de fonctionnement d'un dispositif de sécurité électrique (10) selon l'une quelconque des revendications 1 à 3, comprenant les étapes suivantes:
Mesurer un courant circulant entre la première borne (24) de l'enroulement secondaire (18) du premier dispositif transformateur (12) et la première borne (32) de l'enroulement primaire (28) du second dispositif transformateur (14);
Comparer le courant mesuré à une plage de courant prédéfinie;
Si le courant mesuré est déterminé comme étant en dehors de la plage de courant prédéfinie, actionner un dispositif de commutation (52) pour déconnecter les bornes de sortie (44, 46).

5. Procédé selon la revendication 4, **caractérisé par l'étape:**
Attendre qu'une durée prédéfinie se soit écoulée;
après l'attente, Actionner le dispositif de commutation (52) pour reconnecter les bornes de sortie (44, 46).
